**Europäisches Patentamt**

**European Patent Office**

**Office européen des brevets**

(19)

(11) Veröffentlichungsnummer : **0 314 198 B1**

(12) # EUROPÄISCHE PATENTSCHRIFT

(45) Veröffentlichungstag der Patentschrift :
22.05.91 Patentblatt 91/21

(51) Int. Cl.⁵ : **A01G 3/06**

(21) Anmeldenummer : **88118517.7**

(22) Anmeldetag : **04.09.86**

(54) Handgrasschere.

(30) Priorität : **06.09.85 DE 3531881**
**06.09.85 DE 3531882**

(43) Veröffentlichungstag der Anmeldung :
**03.05.89 Patentblatt 89/18**

(45) Bekanntmachung des Hinweises auf die
Patenterteilung :
**22.05.91 Patentblatt 91/21**

(84) Benannte Vertragsstaaten :
**AT BE CH DE FR GB IT LI LU NL SE**

(56) Entgegenhaltungen :
**US-A- 3 325 896**

(61) Veröffentlichungsnummer der früheren
Anmeldung nach Art. 76 EPü : **0215387**

(73) Patentinhaber : **Wolf-Geräte GmbH**
**Gregor-Wolf-Strasse 16 Postfach 860 und 880**
**W-5240 Betzdorf/Sieg (DE)**

(72) Erfinder : **Orthey, Gebhard**
**Raiffeisenstrasse 10**
**W-5241 Nauroth (DE)**

(74) Vertreter : **Koch, Günther, Dipl.-Ing. et al**
**Kaufingerstrasse 8 Postfach 920**
**W-8000 München 2 (DE)**

## Beschreibung

Die Erfindung bezieht sich auf eine Handgrasschere der im Oberbegriff des Patentanspruchs 1 angegebenen Gattung. Eine derartige Handgrasschere ist aus der US-PS 33 25 896 bekannt. Hierbei ist am Schieber ein nach innen in das Griffgehäuse einstehender Winkelhebel vorgesehen, dessen parallel zum Schieber verlaufender Hebelarm mit einer Rastnase in Rastausnehmungen an der Unterseite des Obergriffs eingreift, wobei die Eingriffsstellung durch die Schenkelfeder gesichert wird. Der andere Arm des Winkelhebels wirkt mit einem Stiftansatz des Untergriffs zusammen, wobei zwei Entriegelungsstellungen vorgesehen sind : Wenn die Rastnase in eine mittlere Raste einfällt, wird die Schere bis zu einem bestimmten Öffnungswinkel geöffnet, während sie beim Eingreifen in die vordere Raste voll geöffnet werden kann. Der Aufbau dieser Verriegelungsvorrichtung ist außerordentlich aufwendig und in der Montage zeitraubend.

Der Erfindung liegt die Aufgabe zugrunde, eine gattungsgemäße Handgrasschere derart zu verbessern, daß die Herstellung durch Vereinfachung des Einbaus des Verriegelungsgliedes verbilligt wird, wobei dieses Verriegelungsglied einfach aufgebaut und bequem betätigbar ist.

Gelöst wird die gestellte Aufgabe durch die im Kennzeichnungsteil des Patentanspruchs 1 angegebenen Merkmale.

Durch die Erfindung wird es möglich, den Zusammenbau der Verriegelungsvorrichtung einfach durch Einschieben des U-förmigen Schiebers vorzunehmen, ohne daß weitere Montagegänge erforderlich wären. Die Halterung des Schiebers erfolgt durch die vorher eingesetzte Schenkelfeder, durch die der Schieber unverlierbar gehaltert ist. Die jeweilige Funktionsstellung ist deutlich erkennbar, weil im vorgeschobenen entriegelten Zustand das Vorderteil des Schiebers über den Griff vorsteht. Zweckmäßige Ausgestaltungen der Erfindung ergeben sich aus den Unteransprüchen.

Nachstehend werden Ausführungsbeispiele der Erfindung anhand der Zeichnung beschrieben. In der Zeichnung zeigen :

Fig. 1 eine Schnittansicht einer Handgrasschere mit Drehgelenk zur Veränderung der Scherenblattanstellung, im geschlossenen Zustand ;

Fig. 2 die in Fig. 1 dargestellte Handgrasschere im entriegelten geöffneten Zustand ;

Fig. 3 den Schnitt einer geschlossenen Handgrasschere, bei der die Schneidebene gegenüber den Griffen nicht verstellbar ist ;

Fig. 4 eine Schnittansicht einer geöffneten Handgrasschere mit fest gegenüber den Handgriffen eingestellter Schneidebene und einer gegenüber Fig. 3 vereinfachten Ausführungsform des Untergriffs.

Die Handgrasschere weist einen aus Kunststoff geformten Obergriff (10) und einen gegenüber diesem über ein Schwenkgelenk (12) verschwenkbaren Untergriff (14) auf, der über einen einstückig angeformten bügelartigen Unterzug (16) zu einem geschlossenen Ring ergänzt ist. Auch der Untergriff besteht aus Kunststoff, und er wird im vorderen Bereich des Schwenkgelenkes (12) von dem schalenartig ausgebildeten, nach unten weisenden Fortsatz (18) des Obergriffs (10) umschlossen und durch einen Schieber (24) am Obergriff (10) in Scherenschließstellung festgelegt.

Der Obergriff weist an seinem vorderen oberen Stirnende einen Schlitz (20) auf, durch den der untere Schenkel (22) des im Schnitt U-förmigen Schiebers (24) in das Innere des schalenförmigen Griffs einschiebbar ist. Der obere Schenkel (26) des Schiebers läuft auf der etwas zurückversetzten vorderen Oberseite des Obergriffs (10), so daß seine zweckmäßigerweise geriffelte Oberfläche bedienungsgünstig mit dem Daumen der die Handgriffe umschließenden Hand vor- und zurückgeschoben werden kann. Seitlich und vorn ist der Schieber (24) schalenförmig derart heruntergezogen, daß er seitlich und vorn mit den Oberflächen des Obergriffs (10) fluchtet.

Das Schwenkgelenk (12) weist eine Gelenkbuchse (28) auf, die in miteinander fluchtende Löcher in den Seitenwänden des Untergriffs (14) eingesetzt ist. Mit der Gelenkbuchse (28) fluchtende Löcher der Seitenwände des Obergriffs (10) sind von einem durch die Buchse (28) geführten Knebelkerbstift (30) durchsetzt, der die Schwenkverbindung der beiden Griffe (10, 14) gewährleistet.

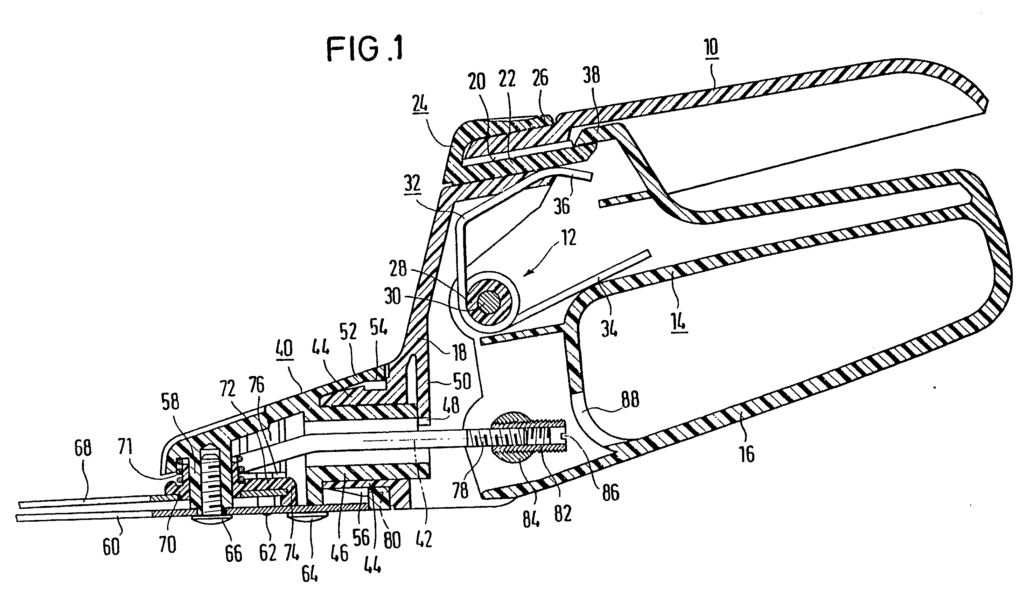

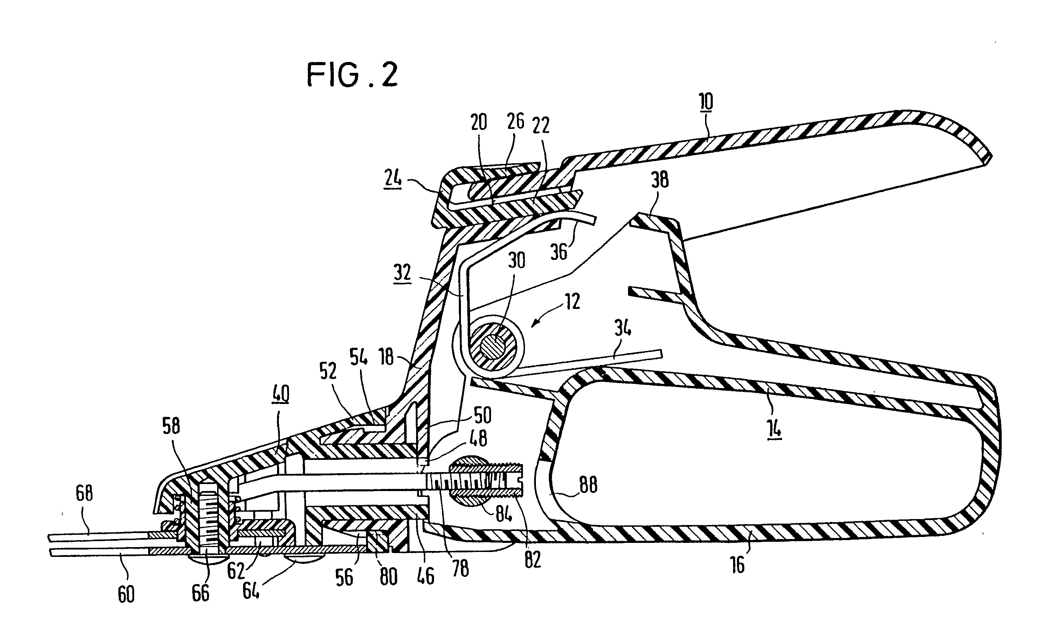

Zwischen den Seitenwänden des Untergriffs (14) ist eine Schenkelfeder (32) vorgesehen, die die Aufgabe hat, den Untergriff von dem Obergriff abzuspreizen. Diese als Drahtfeder ausgebildete Schwenkschenkelfeder (32) ist in ihrem Mittelabschnitt ringförmig aufgewickelt und auf die Gelenkbuchse (28) aufgezogen. Ihr Unterschenkel (34) stützt sich auf der Innenseite des Untergriffs (14) ab und ihr oberer, leicht angewinkelter Schenkel (36) ist gegen den unteren Schenkel (22) des Schiebers (24) abgestützt und wirkt über diesen auf den Obergriff (10). Durch die Federkraft wird der Schieber (24) in seiner Führung vorgespannt, und zwischen Schieber (24) und Obergriff (10) sind an beliebigen Stellen Rastnocken bzw. Rastvertiefungen vorgesehen, die die beiden Schaltstellungen des Schiebers sichern, die aus Fig. 1 bzw. 2 hervorgehen. Diese beiden Schaltstellungen werden durch die Feder (32) fixiert. In zurückgeschobener Stellung gemäß Fig. 1 wird der Untergriff (14) durch den unteren Schenkel (22) des Schiebers (24) gehalten, der hinter einen Ansatz (38) des Untergriffs greift und diesen am Obergriff (10) festhält. In der vorgeschobenen Stellung gemäß Fig. 2 gibt der Schieber diesen Ansatz (38) frei und der Untergriff (14) kann sich unter der Wirkung der Feder (32) abspreizen und die Schere öffnen.

Ein Drehkopf (40) aus Kunststoff trägt die Scherenblätter und ist gegenüber den Griffen um eine Achse (42) schwenkbar, die parallel zur Schnittebene der Scherenblätter verläuft und die Gelenkachse des Handgriff-Schwenkgelenkes (12) senkrecht kreuzt.

Zur Lagerung des Drehkopfes (40) weist der Obergriff-Fortsatz (18) an der vorderen unteren Stirnseite eine angeformte Drehgelenkbüchse (44) auf, in die eine im Inneren des Drehkopfes (40) angeformte Hülse (46) einsteht. An ihrem gemäß Fig. 1 und 2 rechten Ende ist die Hülse (46) mit einer über 180° verlaufenden Stufe (48) versehen, in die ein Anschlag (50) des Obergriff-Fortsatzes (18) einsteht, der die Schwenkbewegung aus der in Fig. 1 und 2 dargestellten Stellung in beiden Drehrichtungen auf je 90° begrenzt.

Der Drehkopf (40) umschließt die Drehgelenkbüchse (44) mit einer schalenförmigen Abdeckung (52), die mit einer Griffriffelung versehen ist.

Im Inneren der Abdeckung (52) greift eine nach innen vorstehende Raste (54) hinter einen radial von der Drehgelenkbüchse (44) nach außen vorstehenden Vorsprung (56), wodurch der Drehgelenkkopf gegen Abnahme von der Drehgelenkbüchse (44) gesichert ist. Die Montage kann einfach dadurch erfolgen, daß der Drehgelenkkopf mit seiner Hülse (46) in die Drehgelenkbüchse (44) eingeschoben wird und dabei mit der Abdeckung die Rastverbindung herstellt, wobei der Kunststoff elastisch zurückweicht und das Aufschieben ermöglicht, infolge der danach aufeinander liegenden Rastflächen ein Abziehen jedoch verhindert.

Im Vorderteil des schalenförmigen Drehkopfes (40) ist innen eine Lagerbuchse (58) angeformt, deren Achse senkrecht zur Schneidebene der Scherenblätter verläuft.

Das feststehende untere Scherenblatt (60) ist mit einem Steckkerbstift (62) und mittels Schrauben (64 bzw. 66) an der Unterseite des Drehkopfes (40) festgelegt. Dabei ist die Schraube (66) in die das Scherengelenk bildende Lagerbuchse (58) eingeschraubt.

Das bewegliche obere Scherenblatt (68) ist mittels einer in ein Loch des Scherenblattes eingesetzten Gleitbuchse (70) auf der Lagerbuchse (58) schwenkbar gelagert. Diese Gleitbuchse (70) aus Kunststoff ist einstückig mit einem über dem hinteren Teil des Scherenblattes liegenden Lagerflansch (72) verbunden, der mit einem den hinteren Rand des Messers umgreifenden Abschnitt (74) versehen ist. Der Flansch (72) läuft an der Unterseite des Drehkopfes ab, wobei durch die Berührung der Kunststoffflächen ein leichtes Gleiten gewährleistet ist. Die Scherenblattbewegung nach außen wird durch einen Anschlag (76) begrenzt, der vom Flansch (72) nach oben vorsteht und mit Gegenanschlägen im Inneren des Drehkopfes zusammenwirkt.

Auf die Lagerbuchse (58) ist eine Druckschraubenfeder (71) aufgesetzt, die das obere Scherenblatt (68) gegen das untere Scherenblatt (60) vorspannt. Die jeweilige Drehstellung des Drehkopfes gegenüber dem Obergriff-Fortsatz kann durch Drehraste (80) zwischen Drehkopf und Drehgelenkhülse (44) fixiert werden, wobei diese Rasten vorzugsweise im Winkelabstand von 22,5° angeordnet sind.

Das vordere abgekröpfte Ende einer durch die Hülse (46) geführten Zugstange (78) ist in einem Loch des oberen Scherenblattes seitlich zum Scherengelenk verankert.

Das hintere Ende der Zugstange (78) ist in eine Stellhülse (82) eingeschraubt. Diese Stellhülse (82) ist mit einem Außengewinde in ein querverlaufendes Gewindeloch eines Stellbolzens (84) eingeschraubt, der in die beiden Seitenwände des Untergriffs (14) zwischen diesen verlaufend eingesetzt ist. Die Stellhülse (82) weist im hinteren Abschnitt Querschlitze (86) oder Schlüsselansätze auf, so daß sie mittels eines Werkzeugs gedreht werden kann, um die Schließstellung der Scherenblätter fixieren zu können. Das Werkzeug kann dabei durch ein Loch (88) des Untergriffs eingeführt werden.

Um zu gewährleisten, daß mit einer nur relativ geringen Winkeldrehung der Stellhülse (82) auch relativ große Toleranzen überbrückt werden können, ist außer der Gewindeverbindung zwischen Stellhülse und Stellbolzen eine weitere Gewindeverbindung zwischen Stellhülse (Innengewinde) und Zugstange (78) (Außengewinde) vorgesehen. Diese Gewinde sind als Differentialgewinde ausgebildet, wobei die Stellhülse innen beispielsweise ein Rechtsgewinde M5(p = 0,8 mm) und außen ein Linksgewinde M8 × 1(p = 1 mm) aufweist.

Durch Vorschieben des Schiebers (24) wird die Schere entriegelt, und sie geht unter der Wirkung der Feder (32) in die aus Fig. 2 ersichtliche Öffnungsstellung über. Durch Betätigen des Untergriffs (14) wird über die Zugstange (78) das obere Scherenblatt (68) gegenüber dem unteren Scherenblatt (60) bewegt und hierdurch kommt eine Schneidbewegung zustande.

Sowohl im geschlossenen und verriegelten Zustand gemäß Fig. 1 als auch im geöffneten Zustand gemäß Fig. 2 kann der Drehkopf (40) gegenüber den Handgriffen verdreht werden, so daß die ergonometrisch günstigste Handhabung der Schere für jeden Anwendungsfall einstellbar ist.

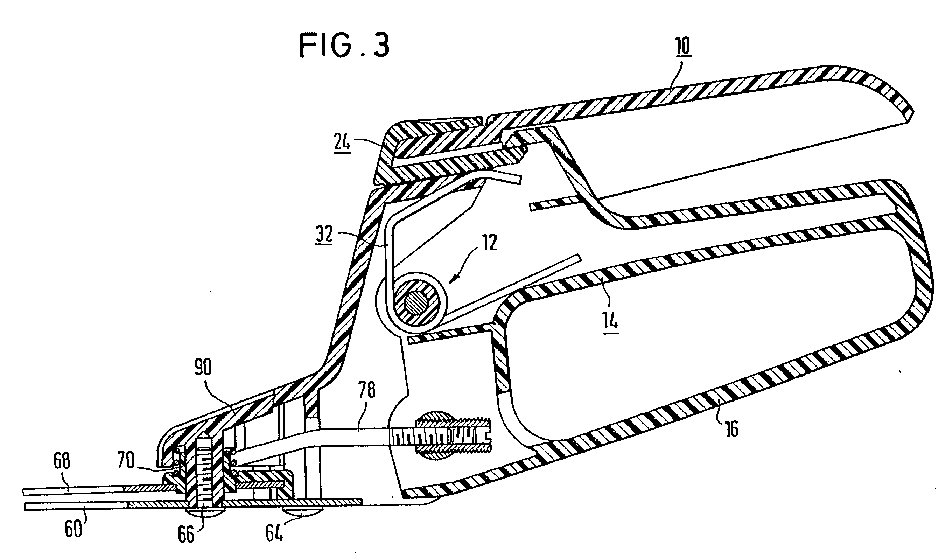

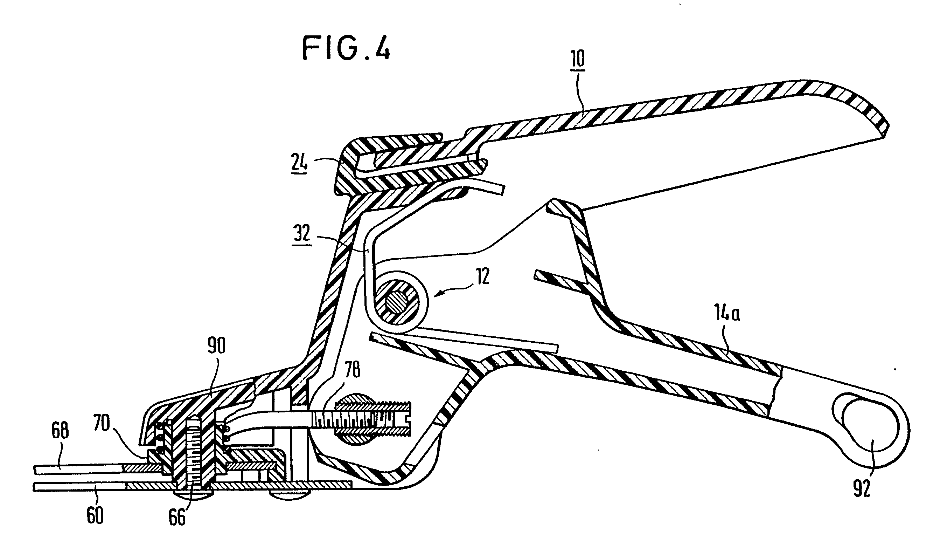

Die Scheren gemäß Fig. 3 und 4 sind grundsätzlich wie die Schere nach Fig. 1 und 2 ausgebildet, und sie unterscheiden sich von dieser im wesentlichen in einer Vereinfachung, die durch den Wegfall des Drehgelenkes gegeben ist. Das heißt, der in Fig. 1 und 2 mit dem Bezugszeichen (40) gekennzeichnete Drehkopf fehlt bzw. ist durch einen festen Lagerkopf (90) ersetzt, der am Unterteil des Fortsatzes (18) des Obergriffs (10) nach vorn ausladend angeformt ist. Dieser Lagerkopf (90) weist wiederum die nach unten stehende Lagerbuchse (58) für das obere Scherenblatt auf, welches über die Zugstange (78) betätigt
wird. Die Funktion ist die gleiche wie bei der Schere
gemäß Fig. 1 und 2.

Fig. 4 veranschaulicht eine vereinfachte Ausführungsform der Schere nach Fig. 3 mit fester Schneidebene, bei der der Untergriff (14a) ohne Unterzug als
Handhebel ausgebildet ist, der ein Loch (92) zum Aufhängen aufweist.

## Ansprüche

1. Handgrasschere mit einem schalenartig ausgebildeten feststehenden Obergriff (10) aus Kunststoff und einem von diesem umschlossenen
schalenartigen aus Kunststoff bestehenden Untergriff
(14), wobei der Obergriff (10) über einen Fortsatz (18)
das feste Scherenblatt (60) trägt, welches mit einem
beweglichen Scherenblatt (68) zusammenarbeitet,
das antriebsmäßig mit dem Untergriff (14) gekuppelt
ist und wobei die beiden Griffe (10, 14) gegen die Wirkung einer Öffnungsspreizfeder (32) in Schließstellung durch ein Verriegelungsglied (24)
gegeneinander verriegelbar sind, das aus einem aus
Kunststoff bestehenden Schieber (24) besteht, der
am Vorderende des Obergriffs (10) gelagert ist, wobei
der Untergriff (14) mit einem Ansatz (38) ausgestattet
ist, der in Verriegelungsstellung von dem unteren
inneren Schenkel (22) des Schiebers (24) erfaßt ist,
dadurch gekennzeichnet, daß der Schieber (24) im
Querschnitt U-förmige Gestalt hat, dessen unterer
Schenkel (22) durch einen vorderen Schlitz (20) des
Obergriffs (10) in diesen einschiebbar ist, wobei der
untere Schenkel (22) des Schiebers (24) im eingeschobenen Zustand den Ansatz (38) des Untergriffs
(14) erfaßt.

2. Handgrasschere nach Anspruch 1, dadurch
gekennzeichnet, daß der gegen den Obergriff (10)
wirkende Schenkel (36), der als Schenkelfeder (32)
ausgebildeten Öffnungsfeder gegen den Unterschenkel (22) des Verriegelungsschiebers (24) anliegt und
diesen in Schließstellung und in Öffnungsstellung
gegen Verschiebung sichert.

3. Handgrasschere nach Anspruch 1, dadurch
gekennzeichnet, daß der Untergriff (14) mit einem
Unterzug (16) ausgeformt ist, welcher einen
geschlossenen Ring bildet.

4. Handgrasschere nach Anspruch 1, dadurch
gekennzeichnet, daß der als Griffhebel (14a) ausgebildete Untergriff mit einer eingeformten Aufhängeöse
(92) versehen ist.

## Claims

1. Hand grass shearer with a fixed moulded upper
handle (10) made of plastic and a moulded lower handle (14) made of plastic surrounded by the latter,
whereby the upper handle (10) carries the fixed
shearer blade (60) on a projection (18), said fixed
shearer blade (60) cooperating with a movable
shearer blade (68) which is coupled with regard to the
drive with the lower handle (14) and whereby the two
handles (10, 14) are lockable with regard to one
another against the action of an opening expander
spring (32) in the closed position by means of a locking member (24), said locking member comprising a
slide (24) made of plastic which is mounted on the
front end of the upper handle (10), the lower handle
(14) being provided with a projection (38) which is
gripped in the locking position by the lower inner leg
(22) of the slide (24),
characterised in that the slide (24) is U-shaped in
cross-section, its lower leg (22) being insertable
through a front slit (20) of the upper handle into the latter, whereby, in the inserted state, the lower leg (22)
of the slide grips the projection (38) of the lower handle (14).

2. Hand grass shearer according to Claim 1,
characterised in that the leg (36) of the opening spring
designed as a leg spring (32) acting against the upper
handle (10) rests against the lower leg (22) of the locking slide (24) and secures the latter against displacement in the closing and opening position.

3. Hand grass shearer according to Claim 1,
characterised in that the lower handle (14) is formed
with a joist (16) which forms a closed ring.

4. Hand grass shearer according to Claim 1,
characterised in that the lower handle which is designed as a release lever (14a) is provided with a suspension loop (92).

## Revendications

1. Cisaille à gazon manuelle comprenant une poignée supérieure (10) en plastique, en forme de
coquille, et une poignée inférieure (14) en plastique
enveloppée par celle-ci, où la poignée supérieure (10)
porte, via un prolongement (18), la lame de cisaille
(60) fixe coopérant avec une lame de cisaille (68)
mobile couplée, quant à l'entraînement, à la poignée
inférieure (14), et où les deux poignées (10, 14) sont
verrouillables l'une contre l'autre en position de fermeture, à l'encontre de l'action d'un ressort écarteur
d'ouverture (32), par un organe de verrouillage (24)
se composant d'un verrou (24) en plastique monté à
l'extrémité avant de la poignée supérieure (10), où la
poignée inférieure (14) est munie d'un talon (38) saisi
par la branche intérieure inférieure (22) du verrou (24)
en position de verrouillage, caractérisée en ce que le
verrou (24) présente en section transversale une
forme de U, dont la branche inférieure (22) peut être
engagée dans la poignée supérieure (10) par une
fente (20) ménagée dans celle-ci, la branche inférieure (22) du verrou (24) saisissant à l'état engagé le talon (38) de la poignée inférieure (14).

2. Cisaille à gazon manuelle suivant la revendication 1, caractérisée en ce que la branche (36) du ressort d'ouverture configuré en ressort à branches (32) intervenant sur la poignée supérieure (10) vient en appui contre la banche inférieure (22) du verrou (24) et immobilise celle-ci en position de fermeture et en position d'ouverture.

3. Cisaille à gazon manuelle suivant la revendication 1, caractérisée en ce que la poignée inférieure (14) est munie d'une garde (16) formant une boucle fermée.

4. Cisaille à gazon manuelle suivant la revendication 1, caractérisée en ce que la poignée inférieure (14) conformée en levier de poignée (14a) est munie d'un oeillet d'accrochage (92) venu de forme.

FIG.1

EP 0 314 198 B1

FIG.2

EP 0 314 198 B1

FIG . 3

FIG.4

EP 0 314 198 B1